# EUROPÄISCHE PATENTANMELDUNG

(11) **EP 3 680 283 A1**
(43) Veröffentlichungstag der Anmeldung: **15.07.2020**
(21) Anmeldenummer: 20150956.9
(22) Anmeldetag: 09.01.2020
(51) Int. Cl.: C08J 7/043, C09D 7/61, C09D 7/40, C09D 133/06, C09D 183/04, C09D 4/00, B05D 7/00, B32B 17/10, B32B 27/36

(54) **BESCHICHTUNGSSYSTEM MIT NANOPARTIKELN**

(30) Priorität: 11.01.2019 DE 102019100650
(71) Anmelder: KRD Coatings GmbH, 21502 Geesthacht (DE)
(72) Erfinder: Hinrichsen, Denni, 21423 Drage OT Stove (DE); Heier, Philip, 22043 Hamburg (DE); Jonek, Markus, 21339 Lüneburg (DE); Neeb, Rolf, 64367 Mühltal, Nieder-Ramstadt (DE)
(74) Vertreter: Noack, Andreas

(57) **Zusammenfassung**

Die Erfindung betrifft ein Beschichtungssystem zur Herstellung eines hochkratzfesten Schichtenverbundes umfassend eine Primerzusammensetzung und eine Oberflächenzusammensetzung, dadurch gekennzeichnet, dass die Primerzusammensetzung a1) Polyalkylmethacrylat, a2) Siliciumdioxid -Nanopartikel, und a3) organisches Lösungsmittel umfasst. Darüber hinaus betrifft die Erfindung Schichtenverbunde, die mittels des Beschichtungssystems herstellbar sind, sowie Verwendungen des Schichtenverbundes und Verfahren zu dessen Herstellung.

## Beschreibung

Die Erfindung betrifft ein Beschichtungssystem der im Oberbegriff des Anspruchs 1 genannten Art, sowie damit hergestellte Schichtenverbunde und Verfahren zu deren Herstellung. Insbesondere betrifft die vorliegende Erfindung ein Beschichtungssystem zur Herstellung von hochkratzfesten Beschichtungen auf Formkörpern, welche die ECE R43 erfüllen.

In vielen Bereichen haben sich thermoplastische Kunststoffe gegenüber der Verwendung von Silikatglas durchgesetzt. Kunststoffe haben gegenüber Glas insbesondere den Vorteil, dass sie zu einer deutlichen Gewichtsersparnis beitragen können und in vielen Fällen bessere mechanische Eigenschaften aufweisen. Thermoplastische Kunststoffe erreichen jedoch nicht die Kratzfestigkeit vieler Metalle und Mineralgläser. Besonders nachteilig macht sich diese Anfälligkeit gegenüber Kratzern bei transparenten Kunststoffen bemerkbar, da die betreffenden Gegenstände sehr schnell unansehnlich und weniger transparent werden.

Aus diesem Grund wurde versucht, Kunststoffoberflächen durch das Aufbringen von sogenannten Kratzfestbeschichtungen kratzfester auszubilden. So beschreiben beispielsweise EP 0 073 911 A1, DE 3 439 482 und DE 2 113 734 C2 kratzfeste Überzüge für Kunststoffe, die eine gute Kratzfestigkeit bei relativ hoher UV-Stabilität aufweisen.

Diese auf diese Weise herstellbaren Kunststoffscheiben erfüllten jedoch weiterhin nicht die hohen Anforderungen an die Kratzfestigkeit nach der überarbeiteten ECE R43 (Stand 08.10.2015), nach der erstmalig Kunststoffscheiben regulär auch im Frontbereich eines Fahrzeugs zugelassen werden konnten. Nach der überarbeiteten Regelung bestand die Möglichkeit Kunststoffscheiben nicht mehr nur in Ausnahmefällen zulassen zu können, sondern deren Abrieb- und Kratzfestigkeit mittels eines Satzes dreier Tests zu bestätigen und damit ihre Eignung für den Fahrzeug-Frontbereich zu zeigen.

In der DE 10 2016 112 319 A1 werden Beschichtungssysteme für Kunststoffverbunde beschrieben, die eine hohe Kratzfestigkeit gewährleisten und damit die Kriterien der Regelung ECE R43 erfüllen und darüber hinaus in weiteren Tests wie dem Taber-Test 500, dem Kochtest (Haftung) nach DIN 2409, einer Wasserlagerung bei 65°C in Anlehnung an ISO 62 und einem Bewitterungstest in Anlehnung an ASTM 6155, ISO 4892-2 und DIN 53387 sehr vorteilhafte Ergebnisse zeigen. Die Beschichtungssysteme umfassen eine Primer- und eine Oberflächenschichtzusammensetzung. Die so hergestellten Verbundscheiben wiesen eine angemessene Schichtdicke auf, sowie eine ausreichende Chemikalienbeständigkeit und zufriedenstellende Farbton- und Spannungsmessungen.

Aufgrund der unterschiedlichen thermischen Ausdehnungskoeffizienten von den organisch-polymeren Kunststoff-Substratscheiben und der hochkratzfesten, nahezu anorganischen Oberflächenschicht besteht allerdings die Gefahr von Mikro-Rissbildung, welche die Scheiben unbrauchbar machen würde. Die zwischen Kunststoff-Substrat und Oberflächenschicht angeordnete polymere Primerschicht muss diese unterschiedlichen Ausdehnungseigenschaften ausgleichen, gleichzeitig eine gute Haftung zwischen den Schichten gewährleisten und die Sprödigkeit der hochkratzfesten Oberflächenschicht ausgleichen.

Der Erfindung liegt daher die Aufgabe zugrunde, entsprechend noch weiter verbesserte Beschichtungsmittel bereitzustellen, die gegenüber den bekannten Beschichtungssystemen eine geringere Rissbildungstendenz aufweisen und zur gleichen Zeit eine ebenso gute Kratzfestigkeit und exzellente optische Eigenschaften aufweisen.

### Beschreibung

Gelöst wird diese Aufgabe sowie weitere, die zwar nicht wörtlich genannt werden, sich aber aus den hierin diskutierten Zusammenhängen ableiten lassen oder sich aus diesen ergeben, durch das in Anspruch 1 beschriebene Beschichtungssystem, sowie einen Schichtenverbund, eine Verwendung des Schichtenverbundes und Verfahren zu dessen Herstellung gemäß weiterer unabhängiger Ansprüche. Zweckmäßige Abwandlungen werden in den Unteransprüchen unter Schutz gestellt.

In einem ersten Aspekt betrifft die Erfindung somit ein Beschichtungssystem zur Herstellung eines hochkratzfesten Schichtenverbundes umfassend eine Primerzusammensetzung und eine Oberflächenzusammensetzung, dadurch gekennzeichnet, dass die Primerzusammensetzung a1) Polyalkylmethacrylat, a2) Siliciumdioxid -Nanopartikel, und a3) organisches Lösungsmittel umfasst. Ein organisches Lösungsmittel ist vorzugsweise 1-Methoxy-2-propanol.

Die Primer- und die Oberflächenzusammensetzungen liegen als getrennte Zusammensetzungen vor, die wie hierin beschrieben, nicht gemischt werden, sondern nacheinander auf eine Kunststoffschicht aufgetragen werden. Dabei wird die Oberflächenzusammensetzung erst aufgetragen, wenn die zuvor aufgebrachte Primerzusammensetzung getrocknet ist.

Die Kombination aus der erfindungsgemäßen Primerzusammensetzung mit einer Oberflächenzusammensetzung erlaubt überraschenderweise die Herstellung von hochkratzfesten Schichtverbunden, die das geforderte Niveau der Regelung ECE R43 erreichen und darüber hinaus weitere sehr gute Eigenschaften aufweisen, insbesondere eine deutlich verringerte Rissbildungstendenz auch bei hohen Lauflängen, eine verbesserte Haftung und verbesserte UV-Beständigkeit. Die an sich sehr rissanfällige, spröde Oberflächenschicht wird durch die Grundierung mit der erfindungsgemäßen Primerschicht so stabil, dass sie sogar bei Lauflängen von mehr als 1500 mm als Beschichtung eingesetzt werden kann. Der Primerschicht kann ein UV-Absorber zugesetzt werden, ohne die Kratzfestigkeit der Beschichtung zu reduzieren.

Ein wesentlicher Vorteil der erfindungsgemäßen Primerzusammensetzung ist, dass sie nicht UV-härtend ausgeführt ist. Es sind im Stand der Technik UV-härtende Acrylate als Bindemittel bekannt, in denen später nach erfolgter UV-Aushärtung auch die Abbauprodukte der Photoinitiatoren nachweisbar sind. Das anspruchsgemässe Polyalkylmethacrylat zählt nicht zu den UV-härtenden Acrylaten. Polyalkylmethacrylat und andere Acrylate mit maximal einer endständigen Doppelbindung, werden als vorteilhaft angesehen. Da keine UV-Härtung vorgesehen ist, muss die Zusammensetzung daher keine UV-Initiatoren enthalten, sie ist bevorzugt deshalb ohne solche UV-Initiatoren ausgeführt. Falls Stoffe, die als UV-Initiatoren dienen können, aus anderen Gründen enthalten sind, so sind diese zumindest nicht für die Aushärtung der Zusammensetzung erforderlich und vorgesehen bzw. nur in einer solchen Menge enthalten, dass dies für eine UV-Härtung nicht ausreicht. Die erfindungsgemäße Primerzusammensetzung enthält also im Ergebnis und bevorzugt kein UV-Initiatorsystem zum Zwecke der UV-Aushärtung.

Im Stand der Technik bekannte Beschichtungssysteme können weiterhin Tenside enthalten, insbesondere geladene, z.B. anionische schwefelhaltige Tenside, um die Abriebfestigkeit zu erhöhen. Auch der Zusatz solcher Tenside ist bei dem erfindungsgemäßen Beschichtungssystem bzw. der Primerzusammensetzung für die Erzielung guter Abriebeigenschaften nicht erforderlich. Dies stellt einen weiteren Vorteil der Erfindung dar, d.h. bevorzugt weist das Beschichtungssystem keine Tenside auf.

Das erfindungsgemäße Beschichtungssystem ist ein Kit aus mindestens einer Primerzusammensetzung und einer Oberflächenzusammensetzung. Das Beschichtungssystem ist für die Herstellung eines hochkratzfesten Schichtenverbundes geeignet, insbesondere für die Herstellung hochkratzfester Kunststoff-Verbundscheiben. Solche Scheiben können zum Beispiel im Fahrzeugbereich eingesetzt werden, z. B. als Frontscheiben oder Scheiben im vorderen Seitenbereich. Da die Primerschicht und die Oberflächenschicht nacheinander aufgebracht werden sollen, liegen Primerzusammensetzung und Oberflächenzusammensetzung als getrennte Lösungen vor.

"Hochkratzfest" im Sinne der Erfindung ist vorzugsweise gleichbedeutend mit einer Erfüllung der ECE R43. Diese Regelung verlangt zum Beispiel, dass die Schichtenverbunde im Wischertest nach ECE R43 ein Testergebnis von ≤ 2 % ΔHaze erzielen und den Bewitterungstest nach ECE R43 bestehen. Somit ist das erfindungsgemäße Beschichtungssystem in einer Ausführungsform zur Herstellung eines Schichtenverbundes geeignet, der im Wischertest nach ECE R43 ein Testergebnis von ≤ 2 % ΔHaze erzielt und den Bewitterungstest nach ECE R43 besteht (Addendum 42 - Regulation No. 43, Revision 3 - Amendment 4, *Uniform provisions concerning the approval of safety glazing materials and their installation on vehicles,* S. 16 ff: "4.9. Wiper laboratory test" und auch S. 35 ff: "6.2 Test of resistance to simulated weathering"; auch in dem dazugehörigen Dokument ECE/TRANS/WP.29/2015/11; in Kraft ab dem 8. Oktober 2015).

Schichtenverbunde im Sinne der Erfindung sind vorzugsweise Kunststoff-Verbunde, d.h. Verbunde, die mindestens eine Kunststoffschicht umfassen. Die erfindungsgemäßen Schichtenverbunde umfassen daher - in dieser Reihenfolge - mindestens eine Kunststoffschicht, eine Primerschicht und eine Oberflächenschicht. Die Primerschicht liegt somit zwischen der Kunststoffschicht und der Oberflächenschicht. Die Oberflächenschicht sollte hierbei in der Regel im Schichtenverbund außenliegend sein. Selbstverständlich ist es nicht ausgeschlossen, dass auf der Oberflächenschicht weitere nützliche Beschichtungen, wie z. B. eine anti-Haftschicht, aufgetragen werden.

Der Schichtenverbund kann jegliche Form aufweisen. Bevorzugt ist der Schichtenverbund eine Scheibe, d.h. ein scheibenförmiger Schichtenverbund. Die Scheibe kann dabei eben sein oder eine Wölbung aufweisen (wie z. B. die Frontscheibe eines Kraftfahrzeugs). "Eben" bedeutet in diesem Zusammenhang, dass die Scheibe plattenförmig ohne Wölbungen in einer Ebene verläuft, d.h. plan. Alternativ kann der Schichtenverbund aber auch ein Formkörper sein, der keine Scheibenform aufweist.

Die erfindungsgemäße Primerzusammensetzung umfasst a1) Polyalkylmethacrylat, a2) Siliciumdioxid-Nanopartikel, und a3) organisches Lösungsmittel

Polyalkylmethacrylate sind dem Fachmann bekannt und im Handel erhältlich. Die Primerzusammensetzung kann ein oder mehrere Polyalkylmethacrylate umfassen, d.h. z. B. eine Mischung aus zwei oder mehr Polyalkylmethacrylaten. Die Polyalkylmethacrylate sind Polymere/Oligomere und Copolymere/-oligomere, die polymerisierte Alkylmethacrylatmonomere umfassen.

Die Polyalkylmethacrylate weisen bevorzugt Alkylkettenlängen von 10 Kohlenstoffatomen oder weniger auf, d.h. Alkylkettenlängen mit 1 bis 10 Kohlenstoffatomen. Polyalkylmethacrylate mit einer Alkylkettenlänge von 1 bis 4 Kohlenstoffatomen sind besonders bevorzugt. Das Polyalkylmethacrylat kann eine lineare oder verzweigte Alkylkette aufweisen, wobei Polyalkylmethacrylate mit linearer Alkylkette bevorzugt sind.

Das Polyalkylmethacrylat kann z. B. ausgewählt sein aus der Gruppe bestehend aus Polymeren von Methylmethacrylat, Ethylmethacrylat, Propylmethacrylat, und Butylmethacrylat. Bevorzugt sind die in der Primerzusammensetzung enthaltenen Polyalkylmethacrylate zu 50% oder mehr Polymethylmethacrylat, stärker bevorzugt zu 60 % oder mehr, am stärksten bevorzugt zu 70% oder mehr. Polymethylmethacrylat ist somit als eine der Hauptkomponenten der erfindungsgemäßen Primerzusammensetzung bevorzugt. Neben Polymethylmethacrylat kann z. B. mindestens ein weiteres Polyalkylmethacrylat von der Zusammensetzung umfasst sein, vorzugsweise eines der vorstehend genannten Polyalkylmethacrylate.

Das Polyalkylmethacrylat kann funktionalisiert sein. Es hat sich beispielsweise herausgestellt, dass es besonders vorteilhaft ist, Polymethylmethacrylate zu verwenden, die eine Säurezahl > 0 aufweisen. Die Säurezahl einer Zusammensetzung kann durch die Masse an Kaliumhydroxid (mg) ausgedrückt werden, die notwendig ist, um 1 g eines Stoffgemisches oder Stoffes zu neutralisieren. Das experimentelle Vorgehen zur Bestimmung einer Säurezahl ist in DIN EN ISO 2114 beschrieben. Die Säurezahl eines verwendeten Polyalkylmethacrylats kann beispielsweise von 2 bis 150 mgKOH/g liegen, bevorzugt von 10 bis 140 mgKOH/g, stärker bevorzugt von 50 bis 110 mgKOH/g. Mittel zur Herstellung von Polyalkylmethacrylaten mit einer Säurezahl >0 sind Fachleuten bekannt und umfassen beispielsweise die Funktionalisierung der Alkylseitenketten mit Carbonsäuren oder Carbonsäureanhydriden. Dabei kann die Funktionalisierung der Alkylseitenketten entweder vor und/oder nach der Polymerisation der entsprechenden Alkylmethacrylate zum Polyalkylmethacrylat erfolgen.

Es hat sich als besonders vorteilhaft erwiesen, wenn die Säurezahl der erfindungsgemäßen Zusammensetzung von 2 bis 50 mgKOH/g bezogen auf ihren Festkörper beträgt, vorzugsweise von 4 bis 25 mgKOH/g, zum Beispiel etwa 7 mgKOH/g. Daher kann die Zusammensetzung Polymethylmethacrylate mit einer Säurezahl > 0 in einer Menge umfassen, die geeignet ist, um die Säurezahl der Zusammensetzung auf einen der vorgenannten Bereiche einzustellen; zum Beispiel in einer Menge von 0,1 bis 30 Gew.-% bezogen auf den Festkörper der Zusammensetzung.

Für die Primerzusammensetzung geeignete Polyalkylmethacrylate sind kommerziell erhältlich und beispielsweise in Degalan M920 (Evonik AG) und Degalan VP1080F (Evonik AG) enthalten. Degalan VP1080F enthält funktionalisierte Polyalkylmethacrylate, insbesondere solche mit einer Säurezahl > 0.

Die Primerzusammensetzung enthält etwa von 30 bis 80 Gew.-% Polyalkylmethacrylat bezogen auf ihren Festkörperanteil, vorzugsweise von 35 bis 70 Gew.-%, besonders bevorzugt von 40 bis 65 Gew.-%. Mit anderen Worten enthält die Primerzusammensetzung 30 Gew.-% oder mehr Polyalkylmethacrylat bezogen auf ihren Festkörperanteil, vorzugsweise 35 Gew.-% oder mehr, stärker bevorzugt 40 Gew.-% oder mehr.

Der "Festkörper" ist derjenige Teil des Beschichtungssystems, der Primerzusammensetzung oder der Oberflächenzusammensetzung, der nach Entfernen aller flüchtigen Anteile durch z. B. Verdunsten der Lösungsmittel zurückbleibt. Der "Festkörperanteil" gibt an, wie viele nicht-flüchtige Bestandteile in dem Beschichtungssystem, der Primerzusammensetzung oder der Oberflächenzusammensetzung enthalten sind. Je kleiner der Festkörperanteil, desto geringer fällt bei gleichem Anfangsvolumen und gleicher Zusammensetzung des Festkörpers die Trockenschichtdicke aus.

Die Primerzusammensetzung umfasst neben dem Polyalkylmethacrylat auch eine oder mehrere Arten von Siliciumdioxid-Nanopartikeln. Siliciumdioxid weist die Summenformel SiO₂ auf. Das erfindungsgemäße Siliciumdioxid ist vorzugsweise amorphes Siliciumdioxid. Das Siliciumdioxid liegt in Form von Nanopartikeln vor, die Siliciumdioxid umfassen und vorzugsweise aus Siliciumdioxid bestehen. Neben dem Siliciumdioxid können die Nanopartikel allerdings auch weitere Verbindungen und/oder Modifikationen, insbesondere auf Ihrer Oberfläche, enthalten. Fachleuten sind entsprechende Modifikationen bekannt.

Ein "Nanopartikel" besitzt ein Außenmaß (Länge, Breite und/oder Höhe) im nanoskaligen Bereich, d.h. im Bereich von 1 nm bis 100 nm. Die Nanopartikel weisen vorzugsweise eine durchschnittliche Größe (Mittelwert) von etwa 20 nm auf. Die Nanopartikel können beispielsweise eine durchschnittliche Partikelgröße von 10 bis 30 nm aufweisen, bevorzugt 15 bis 25 nm, z. B. etwa 20 nm. Vorzugsweise sind die Nanopartikel im Wesentlichen sphärisch, d.h. kugelförmig. Es versteht sich, dass dies Unregelmäßigkeiten in der Oberfläche nicht ausschließt. Die Nanopartikel bilden mit den organischen Lösungsmitteln, die in der erfindungsgemäßen Primerzusammensetzung enthalten sind, stabile Dispersionen.

Die Primerzusammensetzung enthält etwa von 1 bis 50 Gew.-% Siliciumdioxid-Nanopartikel bezogen auf ihren Festkörperanteil, vorzugsweise von 10 bis 35 Gew.-%, besonders bevorzugt von 15 bis 30 Gew.-%, noch stärker bevorzugt von 20 bis 30 Gew.%. Mit anderen Worten enthält die Primerzusammensetzung 1 Gew.-% oder mehr Siliciumdioxid-Nanopartikel bezogen auf ihren Festkörperanteil, 5 Gew.-% oder mehr, 10 Gew.-% oder mehr, 15 Gew.-% oder mehr, oder 20 Gew.-% oder mehr. In einer Ausführungsform umfasst Primerzusammensetzung mindestens 18 Gew.-% Siliciumdioxid-Nanopartikel bezogen auf ihren Festkörperanteil.

Es ist erfindungsgemäß bevorzugt, dass der Festkörperanteil der Primerzusammensetzung zu 75 bis 100 Gew.-% aus einer Mischung aus Polyalkylmethacrylat und Siliciumdioxid-Nanopartikeln besteht, vorzugsweise zu 80 bis 100 Gew.-%, stärker bevorzugt zu 85 bis 100 Gew.-%. Dabei kann das Verhältnis zwischen Polyalkylmethacrylaten und Siliciumdioxid-Nanopartikeln in der Primerzusammensetzung z. B. bei etwa 1:1 oder zwischen 10:1 und 1:10, vorzugsweise zwischen 10:1 und 1:1 liegen.

Durch die erfindungsgemäße Verwendung von Siliciumdioxid-Nanopartikeln in der Primerzusammensetzung kann auf weitere Inhaltsstoffe verzichtet werden, welche die unterschiedlichen Temperaturausdehnungskoeffizienten der Substratschicht und der Oberflächenschicht ausgleichen könnten, oder der Anteil dieser Inhaltsstoffe deutlich reduziert werden. So ist es insbesondere nicht erforderlich, der erfindungsgemäß verwendeten Primerzusammensetzung Polysiloxan beizufügen. Daher umfasst die Primerzusammensetzung bezogen auf ihren Festkörperanteil weniger als 25 Gew.-% Polysiloxan, bevorzugt kein Polysiloxan.

Die Herstellung der Primerzusammensetzung kann die Mischung einer ersten Lösung, die Polyalkylmethacrylat enthält, mit einer Dispersion, die Siliciumdioxid-Nanopartikel enthält, umfassen. Vorzugsweise liegen das oder die Polyalkylmethacrylate in der ersten Lösung bei der Mischung in einem organischen Lösungsmittel gelöst vor. Die Siliciumdioxid-Nanopartikel liegen bei der Mischung in einer stabilen Dispersion vor. Mit anderen Worten, werden sowohl für die Herstellung der Lösung der Polyalkylmethacrylate als auch für die Herstellung der Dispersion der Siliciumdioxid-Nanopartikel organische Lösungsmittel verwendet. Geeignete organische Lösungsmittel sind an anderer Stelle hierin beschrieben. Anders gesagt wird die Primerzusammensetzung vorzugsweise durch Mischung einer mit organischem Lösungsmittel verdünnten Polyalkylmethacrylatlösung mit Dispersion von Siliciumdioxid-Nanopartikeln in organischen Lösungsmitteln hergestellt. Die Primerzusammensetzung ist z. B. herstellbar, indem eine Polyalkylmethacrylatlösung vorgelegt wird und die Siliciumdioxid-Nanopartikel-Dispersion unter Rühren hinzugegeben und im Ultraschallbad miteinander vermischt wird.

Neben Polyalkylmethacrylat und Siliciumdioxid-Nanopartikeln kann die erfindungsgemäße Primerzusammensetzung ein organisches Lösungsmittel umfassen. Das organische Lösungsmittel hält die Festkörperanteile der Primerzusammensetzung in Lösung und verdunstet nach dem Auftragen oder Fluten der Primerzusammensetzung auf die Kunststoffschicht. Mit dem organischen Lösungsmittel wird die Primerzusammensetzung somit auf den gewünschten Festkörperanteil eingestellt. Geeignete organische Lösungsmittel sind z. B. ausgewählt aus der Gruppe bestehend aus Alkoholen, wie z. B. 1-Methoxy-2-propanol, Diacethylalkohol, Ethanol, Isopropanol, n-Propanol, Isobutylalkohol, Butylalkohol, n-Butanol, Methoxyethanol; Ketone, wie z. B. Aceton, Methylethylketon; Isopropylglycol oder weitere, z. B. in EP 0 035 272 beschriebene, gebräuchliche organische Lösungsmittel für Beschichtungsmittel und für Kratzfestlacke. Besonders bevorzugte organische Lösungsmittel sind 1-Methoxy-2-propanol, Isopropylglycol und Diacethylalkohol. Auch Methoxypropylacetat ist ein Lösungsmittel im Sinne der Erfindung.

Die Primerzusammensetzung kann ein oder mehrere organische Lösungsmittel enthalten. In einer Ausführungsform enthält die Primerzusammensetzung 1-Methoxy-2-propanol und Diacethylalkohol. In einer weiteren Ausführungsform enthält die Primerzusammensetzung 1-Methoxy-2-propanol, Ethanol, n-Butanol, Isopropylglycol und Diacethylalkohol. Es kann z. B. zu einer Mischung unterschiedlicher organischer Lösungsmittel in der Primerzusammensetzung kommen, wenn z. B. das Polyalkylmethacrylat und die Siliciumdioxid-Nanopartikel vor der Herstellung der Primerzusammensetzung in unterschiedlichen Lösungsmitteln gelöst vorlagen. Auch Wasser kann die Primerzusammensetzung als weiteres Lösungsmittel enthalten.

Die Primerzusammensetzung kann beispielsweise von 10 bis 50 Gew.-%, vorzugsweise von 15 bis 40 Gew.-%, stärker bevorzugt von 20 bis 35 Gew.-% Diacethylalkohol bezogen auf die vollständige Primerzusammensetzung enthalten, d.h. bezogen auf die Primerzusammensetzung mit Festkörperanteil und Lösungsmittelanteil. Die Primerzusammensetzung kann beispielsweise von 40 bis 85 Gew.-%, vorzugsweise von 50 bis 75 Gew.-%, stärker bevorzugt von 55 bis 70 Gew.-% 1-Methoxy-2-propanol bezogen auf die vollständige Primerzusammensetzung enthalten. So kann die Primerzusammensetzung beispielsweise 55 bis 70 Gew.-% 1-Methoxy-2-propanol und von 20 bis 35 Gew.-% Diacethylalkohol, bezogen auf die vollständige Primerzusammensetzung, enthalten.

Der Festkörperanteil der Primerzusammensetzung bestimmt in Abhängigkeit von dem Herstellungsverfahren, welches für die Herstellung des Schichtenverbundes verwendet wird, die Schichtdicke der Primerschicht. Gleiches gilt für die Oberflächenzusammensetzung bzw. die Oberflächenschicht. Die Schichtdicke der Primerschicht beeinflusst z. B. die Leistung der Schichtenverbunde in den in der ECE R43 beschriebenen Tests. Vorteilhafte Schichtdicken sind an anderer Stelle hierin beschrieben. Es wurde festgestellt, dass diese Schichtdicken bei einer Aufbringung der Primerschicht durch das Flutverfahren bei einem Festkörperanteil der Primerzusammensetzung von 1 Gew.-% bis 25 Gew.-% erreicht werden. Entsprechend weist die Primerzusammensetzung vorzugsweise einen Festkörperanteil von 1 Gew.-% bis 25 Gew.-%, stärker bevorzugt von 1,5 Gew.-% bis 20 Gew.-%, noch stärker bevorzugt von 2 Gew.-% bis 15 Gew.-%, wie z. B. von etwa 2,5 Gew.-%, auf. Der Fachmann ist in der Lage, je nach verwendetem Herstellungsverfahren für die Schichtenverbunde, diesen Festkörperanteil so anzupassen, dass eine geeignete Schichtdicke erzielt wird.

Die Primerzusammensetzung weist erfindungsgemäß einen Festkörperanteil auf, der geeignet ist, eine Primerschichtdicke von 0,1 µm bis 12,0 µm, vorzugsweise von 0,2 µm bis 5,0 µm, stärker bevorzugt 0,3 µm bis 3 µm, zu erzeugen.

In einer bevorzugten Ausführungsform besteht der Festkörperanteil der Primerzusammensetzung a1) zu etwa 30 bis 80 Gew.-% aus Polyalkylmethacrylat; und a2) zu etwa 10 bis 35 Gew.-% aus Siliciumdioxid-Nanopartikeln (wie z. B. in Nanopol® C 764 von Evonik Industries AG enthalten); und darüber hinaus enthält die Primerzusammensetzung a3) ein oder mehrere organische Lösungsmittel, wie z. B. 1-Methoxy-2-propanol (MOP). In einer noch stärker bevorzugten Ausführungsform besteht der Festkörperanteil der Primerzusammensetzung a1) zu etwa 40 bis 65 Gew.-% aus Polyalkylmethacrylat; und a2) zu etwa 20 bis 30 Gew.-% aus Siliciumdioxid-Nanopartikeln; und darüber hinaus enthält die Primerzusammensetzung a3) ein oder mehrere organische Lösungsmittel, wie z. B. 1-Methoxy-2-propanol (MOP).

Neben den oben genannten Bestandteilen kann die Primerzusammensetzung weitere Additive enthalten, die z. B. das Produkt einfärben, die eine zusätzliche Erhöhung des UV-Schutzes bewirken oder zu einer Haftungsverbesserung führen. Dem Fachmann sind solche geeigneten Additive bekannt.

Es ist besonders bevorzugt, dass die Primerzusammensetzung einen oder mehrere UV-Absorber umfasst. UV-Absorber sind chemische Verbindungen, die als Schutz gegen Alterung durch UV-Strahlung wirken, indem sie UV-Strahlung absorbieren. Dem Fachmann sind geeignete UV Absorber bekannt. Geeignete UV-Absorber umfassen z. B. Hydroxybenzotriazole, Triazine, Hydroxybenzophenone (siehe z. B. WO 2011/032915 A1), Dibenzoylresorcinole wie 4,6-Dibenzoyl-2-(3-triethyoxysilylpropyl)resorcinol, Titandioxide, Zinkoxide, Cerdioxide, 2-Hydroxy-benzophenone, 2,4-Dihydroxybenzophenone, 2-(2-Hydroxyphenyl)benzotriazole, 2-(2-Hydroxyphenyl)-1,3,4-triazine, 2-Cyanacrylate, Dibenzoylresorcinole und Oxalnilide. Besonders bevorzugte UV Absorber sind Hydroxybenzotriazole, 2,4-Dihydroxybenzophenone, Dibenzoylresorcinole, Hydroxybenzophenone und 4,6-Dibenzoyl-2-(3-triethyoxysilylpropyl)resorcinol.

Die Primerzusammensetzung kann z. B. 1 bis 30 Gew.-% UV Absorber bezogen auf den Festkörperanteil der Primerzusammensetzung enthalten, vorzugsweise 1 bis 20 Gew.-%, besonders bevorzugt 3 bis 15 Gew.-%.

Die erfindungsgemäße Oberflächenzusammensetzung umfasst b1) kolloidales Siliciumdioxid, b2) Methyltrimethoxysilan (MTMS) und/oder Methyltriethoxysilan (MTES), b3) Methyltriacetoxysilan (MTAS), und b4) organisches Lösungsmittel. Das oder die organischen Lösungsmittel sind bevorzugt n-Butanol und/oder Isopropanol, besonders bevorzugt n-Butanol. Ferner umfasst die Oberflächenzusammensetzung vorzugsweise, wie an anderer Stelle hierin erläutert, Polyetherdisilan.

Kolloidales Siliciumdioxid (auch: kolloidales Siliciumdioxyd) verbessert die Kratzfestigkeit und weist außerdem eine gute Haftung auf verschiedenen Substraten auf. Vorzugsweise umfasst die Herstellung der Oberflächenzusammensetzung die Vermischung einer Dispersion, die kolloidale Siliciumdioxide enthält, mit weiteren Komponenten der Oberflächenzusammensetzung. Es hat sich herausgestellt, dass sowohl saure als auch basische kolloidale Siliciumdioxide für die erfindungsgemäße Oberflächenzusammensetzung geeignet sind. Bevorzugt ist ein basisches kolloidales Siliciumdioxid. Dispersionen, die kolloidale Siliciumdioxide enthalten, sind von verschiedenen Herstellern erhältlich. Geeignete kolloidale Siliciumdioxide sind z. B. das basische Ludox LS (z. B. von Hersteller: Grace) oder das saure Levasil 200E/20 (z. B. von Hersteller: Akzonobel). Die kolloidalen Siliciumdioxide weisen eine gute Verträglichkeit gegenüber organischen Lösungsmitteln innerhalb der Reaktionszeit während der Herstellung auf, so dass es im Wesentlichen zu keiner Ausfällungsreaktion kommt.

Das kolloidale Siliciumdioxid, welches für die Herstellung der Oberflächenzusammensetzung genutzt wird, liegt in wässrigen Dispersionen vor und ist unter basischen bzw. sauren Bedingungen stabilisiert. Es unterscheidet sich von den in der Primerzusammensetzung verwendeten Siliciumdioxid-Nanopartikeln mindestens darin, dass letztere in organischen Lösungsmitteln stabile Dispersionen bilden, während das kolloidale Siliciumdioxid für die Herstellung der Oberflächenzusammensetzung in einer wässrigen Lösung vorliegt.

Die Oberflächenzusammensetzung umfasst von 20 bis 70 Gew.-% kolloidales Siliciumdioxid bezogen auf ihren Festkörperanteil, bevorzugt von 35 bis 55 Gew.-%, noch stärker bevorzugt 40 bis 50 Gew.-%, z. B. etwa 45 Gew.-%.

Daneben umfasst die Oberflächenzusammensetzung Methyltrimethoxysilan (MTMS) und/oder Methyltriethoxysilan (MTES).

Die Oberflächenzusammensetzung umfasst von 30 bis 80 Gew.-% MTMS und/oder MTES bezogen auf ihren Festkörperanteil, vorzugsweise von 40 bis 75 Gew.-%, stärker bevorzugt von 50 bis 60 Gew.-%, z. B. zu etwa 55 Gew.-%. Während sowohl MTMS als auch MTES in der erfindungsgemäßen Oberflächenzusammensetzung gute Ergebnisse erzielen, ist MTMS besonders bevorzugt. In einigen Ausführungsformen kann daher ganz auf den Einsatz von MTES verzichtet werden, sodass die Oberflächenzusammensetzung dann von 30 bis 80 Gew.-% MTMS bezogen auf ihren Festkörperanteil, vorzugsweise von 40 bis 75 Gew.-%, stärker bevorzugt von 50 bis 60 Gew.-%, z. B. zu etwa 55 Gew.-% enthält.

Das Verhältnis zwischen dem kolloidalem Siliciumdioxid und dem MTMS und/oder MTES in der Oberflächenzusammensetzung kann bei etwa 1:4 oder zwischen 1:5 und 5:1, vorzugsweise zwischen 4:1 und 1:4 liegen.

Daneben kann die Oberflächenzusammensetzung Methyltriacetoxysilan (MTAS) enthalten. Die Oberflächenzusammensetzung umfasst beispielsweise von 0,05 bis 0,9 Gew.-% MTAS bezogen auf ihren Festkörperanteil, vorzugsweise von 0,1 bis 0,5 Gew.-%, so wie z. B. etwa 0,2 Gew.-%.

Darüber hinaus kann die Oberflächenzusammensetzung weitere Oberflächenadditive umfassen. Geeignete Oberflächenadditive sind dem Fachmann bekannt. Die Additive werden in kleinen Mengen zugesetzt, so dass sie den Aufbau des Schichtenverbundes nicht wesentlich beeinträchtigen. Geeignete Oberflächenadditive sind z. B. solche, welche die Oberflächenspannung reduzieren (z. B. Polyetherdisilan, wie BYK-342 von BYK), d.h. oberflächenaktive Substanzen, mit deren Hilfe die Oberflächenspannung der Beschichtungsformulierung reguliert und gute Auftragseigenschaften erreicht werden können.

Die Oberflächenzusammensetzung kann zum Beispiel von 0 bis 10 Gew.-% weitere Additive, insbesondere 0 bis 5 Gew.-%, bezogen auf ihren Festkörperanteil enthalten. So können z. B. gemäß US 2008/0145552 A1 Siloxan-Typen in Konzentrationen von 0,0001 bis 2 Gew.-% verwendet werden. Wie an anderer Stelle erwähnt, ist bevorzugt, dass die Oberflächenzusammensetzung Polyetherdisilan umfasst, vorzugsweise in einer Konzentration von 0,001 bis 0,1 Gew.-% bezogen auf den Festkörperanteil, stärker bevorzugt von 0,01 bis 0,05 Gew.-%, z. B. etwa 0,02 Gew.-%.

Daneben kann die Oberflächenzusammensetzung ein oder mehrere organische Lösungsmittel enthalten. Geeignete organische Lösungsmittel sind an anderer Stelle hierin für die Primerzusammensetzung beschrieben. Diese Lösungsmittel können erfindungsgemäß ebenso für die Oberflächenzusammensetzung eingesetzt werden. Besonders bevorzugt umfasst die Oberflächenzusammensetzung n-Butanol, Isopropanol, n-Propanol, Isobutylalkohol, Isopropylglykol, Butylalkohol, Methoxypropanol, Methoxyethanol; Diacetonalkohol und/oder weitere in US 4,396,678 oder EP 0 035 272 beschriebene, gebräuchliche organische Lösungsmittel für Beschichtungsmittel und für Kratzfestlacke. Mit den Lösungsmitteln wird die Oberflächenzusammensetzung auf den gewünschten Festkörperanteil eingestellt. In einer Ausführungsform enthält die Oberflächenzusammensetzung Isopropanol. In einer weiteren, bevorzugten Ausführungsform enthält die Oberflächenzusammensetzung n-Butanol.

Wie oben beschrieben, bestimmt der Festkörperanteil der Oberflächenzusammensetzung in Abhängigkeit von dem Herstellungsverfahren, welches für die Herstellung des Schichtenverbundes verwendet wird, die Schichtdicke der Oberflächenschicht. Vorteilhafte Schichtdicken sind an anderer Stelle hierin beschrieben. Es wurde festgestellt, dass diese Schichtdicken bei einer Aufbringung der Oberflächenschicht durch das Flutverfahren bei einem Festkörperanteil der Oberflächenzusammensetzung von 15 bis 30 Gew.-% erreicht werden. Entsprechend weist die Oberflächenzusammensetzung vorzugsweise einen Festkörperanteil zwischen 15 und 30 Gew.-%, stärker bevorzugt zwischen 18 und 22 Gew.-%, am stärksten bevorzugt zwischen 19,5 und 20,5 Gew.-% auf. Beispielsweise kann die Oberflächenzusammensetzung einen Festkörperanteil von etwa 20 Gew.-% aufweisen. Der Fachmann ist in der Lage, je nach verwendetem Herstellungsverfahren für die Schichtenverbunde, diesen Festkörperanteil so anzupassen, dass eine geeignete Schichtdicke erzielt wird.

Die Oberflächenzusammensetzung weist erfindungsgemäß einen Festkörperanteil auf, der geeignet ist, eine Oberflächenschichtdicke von 2,0 µm bis 8,5 µm, vorzugsweise von 2,5 µm bis 7,5 µm, zu erzeugen.

In einer bevorzugten Ausführungsform weist die Oberflächenzusammensetzung somit b1) 20 bis 70 Gew.-% kolloidales Siliciumdioxid (wie z. B. Ludox LS oder Levasil 200E/20), b2) 30 bis 80 Gew.-% MTMS und/oder MTES, b3) 0,05 bis 0,9 Gew.-% MTAS, b4) organisches Lösungsmittel (wie z. B. n-Butanol oder Isopropanol), und b5) 0,001 bis 0,1 Gew.-% Polyetherdisilan, jeweils bezogen auf den Festkörperanteil, auf. In einer noch stärker bevorzugten Ausführungsform weist die Oberflächenzusammensetzung b1) 40 bis 50 Gew.-% kolloidales Siliciumdioxid (wie z. B. Ludox LS oder Levasil 200E/20), b2) 50 bis 60 Gew.-% MTMS und/oder MTES, b3) 0,1 bis 0,5 Gew.-% MTAS, b4) organisches Lösungsmittel (wie z. B. n-Butanol oder Isopropanol), und b5) 0,01 bis 0,05 Gew.-% Polyetherdisilan, jeweils bezogen auf den Festkörperanteil, auf.

Die Oberflächenzusammensetzung ist vorzugsweise herstellbar, indem MTMS und/oder MTES und MTAS gemischt werden und unter Rühren das Siliciumdioxid hinzugegeben wird. Anschließend wird nach der Reaktion der Festkörperanteil mit Hilfe des Lösungsmittels eingestellt.

Darüber hinaus kann auch der pH Wert der Oberflächenzusammensetzung eingestellt werden. Es ist dabei bevorzugt, dass der pH Wert auf einen Wert von 6,5 bis 7,9, vorzugsweise auf einen Wert von 7 bis 7,4 eingestellt wird. In einer besonders bevorzugten Ausführungsform wird der pH Wert auf einen Wert von 7,2 eingestellt.

Es versteht sich, dass die genannten Bestandteile der Primerzusammensetzung und der Oberflächenzusammensetzung nach ihrem Zusammenmischen in der Primerzusammensetzung bzw. der Oberflächenzusammensetzung miteinander reagieren können und sollen. Die Primerzusammensetzungen und Oberflächenzusammensetzungen, die durch die Reaktion der zuvor definierten einzelnen Bestandteile entstanden sind, sind somit erfindungsgemäß mitumfasst.

In einem weiteren Aspekt betrifft die vorliegende Erfindung einen Schichtenverbund umfassend eine Kunststoffschicht, eine an die Kunststoffschicht angrenzende Primerschicht und eine an die Primerschicht angrenzende Oberflächenschicht, dadurch gekennzeichnet, dass die Primerschicht und Oberflächenschicht hergestellt sind aus einer Primerzusammensetzung bzw. einer Oberflächenzusammensetzung des hierin beschriebenen, erfindungsgemäßen Beschichtungssystems. Mit anderen Worten enthalten die Primerschicht und die Oberflächenschicht neben den in dem Festkörper der Primerzusammensetzung bzw. der Oberflächenzusammensetzung enthaltenen Verbindungen möglicherweise auch Reaktionsprodukte, insbesondere Polymerisationsprodukte, aus den im Festkörperanteil der jeweiligen Zusammensetzung enthaltenen Bestandteilen.

Die Primerschicht weist vorzugsweise Polyalkylmethacrylate mit einem Molekulargewicht von 100 000 Da bis 800 000 Da auf, besonders bevorzugt von 200 000 Da bis 500 000 Da. Es können z. B. von 50% bis 100% der in der Primerschicht enthaltenen Polyalkylmethacrylate ein Molekulargewicht innerhalb dieser Grenzen aufweisen, bevorzugt von 70% bis 100%.

Die Primerschicht kann eine Schichtdicke von 0,1 µm bis 12,0 µm, vorzugsweise von 0,2 µm bis 8,0 µm, stärker bevorzugt 0,3 bis 5 µm, wie z. B. etwa 1 µm, aufweisen. Aufgrund ihrer vorteilhaften, geringen Rissbildungstendenz kann die Primerschicht eine besonders hohe Schichtdicke aufweisen. Es ist somit bevorzugt, dass die Primerschicht eine Dicke von 0,5 µm oder mehr, bevorzugt 1 µm oder mehr, stärker bevorzugt von 2 µm oder mehr aufweist.

Die Oberflächenschicht kann z. B. eine Dicke von 2,0 µm oder mehr, bevorzugt 2,5 µm oder mehr, stärker bevorzugt 5 µm oder mehr aufweisen. Die Oberflächenschicht weist, anders gesagt, eine Dicke von 2,0 µm bis 8,5 µm, vorzugsweise von 2,5 µm bis 7,5 µm.

Die Kombination aus den erfindungsgemäßen Primer- und Oberflächenschichten ist besonders gut zur Erzeugung kratzfester, witterungsbeständiger Beschichtungen auf Kunststoffen geeignet. Die Kunststoffschicht kann insbesondere einen Kunststoff umfassen, der ausgewählt ist aus der Gruppe bestehend aus Polycarbonaten, Polystyrolen, Polyestern, beispielsweise Polyethylenterephtalat (PET), die auch glykolmodifiziert sein können, Polybutylenterephtalat (PBT), cycloolefinischen Copolymeren (COC), Acrylnitriden, Butatien, Styrol-Copolymeren, Poly(meth)acrylaten, wie Polymethylmethacrylat, Polyethylen, Polypropylen, Polyvinylchlorid und/oder Celluloseester. Bevorzugt ist die Kunststoffschicht eine Polycarbonatschicht oder eine Polymethyl(meth)acrylatschicht.

In einer besonders bevorzugten Ausführungsform ist die Kunststoffschicht eine Polycarbonatschicht. Polycarbonate sind in der Fachwelt bekannt. Polycarbonate können formal als Polyester aus Kohlensäure und aliphatischen oder aromatischen DihydroxyVerbindungen betrachtet werden. Sie sind leicht zugänglich durch Umsetzung von Diglykolen oder Biphenolen mit Phosgen bzw. Kohlensäurediestern in Polykondensation - bzw. Umesterungsreaktionen. Polycarbonate, die sich von Biphenolen ableiten, sind erfindungsgemäß bevorzugt. Zu diesen Biphenolen gehören insbesondere 2,2-Bis-(4-hydroxyphenyl)-propan (Bisphenol A), 2,2- Bis-(4-hydroxphenyl)-butan (Bisphenol B). Üblicherweise werden derartige aromatische Polycarbonate durch Grenzflächenpolykondensation oder Umesterung hergestellt, wobei Einzelheiten in Encycl.Polym.Sci.Eingang.11, S. 648-718 dargestellt sind. Bei der Grenzflächenpolykondensation werden die Biphenole als wässrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysator können z. B. Amine, bei sterisch gehinderten Biphenolen auch Phasentransferkatalysatoren, zum Einsatz kommen. Die resultierenden Polymere sind in den verwendeten organischen Lösungsmitteln löslich.

In einer weiteren bevorzugten Ausführungsform ist die Kunststoffschicht eine Poly(meth)acrylatschicht. Polymethacrylate werden im Allgemeinen durch radikalische Polymerisation von Mischungen erhalten, die (Meth)acrylate enthalten. Geeignete (Meth)acrylate sind dem Fachmann bekannt und können z. B. ausgewählt sein aus der Gruppe bestehend aus (Meth)acrylaten, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; und Methacylaten, die sich von ungesättigten Alkoholen ableiten, wie z. B. Oleyl(meth)acrylat, 2-Propinyl(meth)acrylat, Allyl(meth)acrylate, 2-Vinyl(meth)acrylate, Aryl(meth)acrylate, wie Benzyl(meth)acrylat. Weitere bevorzugte (monofunktionelle) Co-Monomere sind z. B. Butylacrylat, 2-Hydroxyethylacrylat, 2-Hydroxyethylmethacrylat, Hydroxypropylacrylat, tert.-Butylmethacrylat, und Isobornylmethacrylat.

Die erfindungsgemäßen Schichtenverbunde können aus lediglich den drei beschriebenen Schichten (Kunststoffschicht, Primerschicht und Oberflächenschicht) bestehen oder Teil eines mehrschichtigeren Verbundes sein. So kann der Schichtenverbund z. B. ferner eine Schicht aus einem thermoplastischen Polyurethan und/oder weitere Kunststoffschichten, wie z. B. Polycarbonatschichten und/oder PMMA Schichten umfassen. In bevorzugten Ausführungsformen umfasst der Schichtenverbund angrenzend an die Kunststoffschicht eine Schicht aus einem thermoplastischen Polyurethan und angrenzend an letztere Schicht eine weitere Kunststoffschicht. Letztere kann ebenfalls mit einer Primerschicht und einer darüber liegenden Oberflächenschicht beschichtet sein.

Die erfindungsgemäßen Schichtenverbunde sind außerordentlich UV-stabil. Aus diesem Grund betrifft die Erfindung in einem weiteren Aspekt die Verwendung eines erfindungsgemäßen Schichtenverbundes im Außenbereich. Es versteht sich, dass die Schichtenverbunde auch für den Innenbereich geeignet sind. "Außenbereich" umfasst in diesem Zusammenhang alle Bereiche, die einer regelmäßigen UV-Einstrahlung unterliegen. So betrifft die Erfindung z. B. die Verwendung eines erfindungsgemäßen Schichtenverbundes im Kraftfahrzeugbereich bzw. für Automobil-Verscheibungen, z. B. als Scheiben im Frontbereich von Kraftfahrzeugen.

In einem weiteren Aspekt betrifft die Erfindung ein Verfahren zur Herstellung eines Schichtenverbundes, Schritte umfassend bei denen man (a) die Primerzusammensetzung eines erfindungsgemäßen Beschichtungssystems als Primerschicht auf eine Kunststoffschicht aufbringt und trocknet, und (b) anschließend die Oberflächenzusammensetzung eines erfindungsgemäßen Beschichtungssystems nach als Oberflächenschicht auf die Primerschicht aufbringt und trocknet.

Die hierin beschriebene und in Schritt a) verwendete Primerzusammensetzung kann nach einem ebenfalls von der Erfindung umfassten Verfahren zur Herstellung einer Primerzusammensetzung hergestellt sein. Daher betrifft die Erfindung in einem weiteren Aspekt ein Verfahren zur Herstellung einer Primerzusammensetzung, das Schritte umfasst, bei denen man i) Polyalkylmethacrylat und organisches Lösungsmittel mischt, ii) Silicium-Nanopartikel und optional UV Absorber mit der in Schritt i) hergestellten Lösung vermischt, und iii) optional die Mischung aus Schritt ii) mit Ultraschall behandelt.

Die hierin beschriebene und in Schritt b) verwendete Oberflächenzusammensetzung kann nach einem ebenfalls von der Erfindung umfassten Verfahren zur Herstellung einer Oberflächenzusammensetzung hergestellt sein. Daher betrifft die Erfindung in einem weiteren Aspekt ein Verfahren zur Herstellung einer Oberflächenzusammensetzung, das Schritte umfasst, bei denen man I) MTMS, MTAS und/oder MTES mischt, II) das kolloidale Siliciumdioxid zu der in Schritt I) hergestellten Mischung hinzufügt, und III) organisches Lösungsmittel zur Einstellung des gewünschten Festkörperanteils zu der in Schritt II) hergestellten Mischung hinzufügt.

Verfahren zum Aufbringen der Primer- und der Oberflächenzusammensetzung in dem Verfahren zur Herstellung eines Schichtenverbundes als Primer- und Oberflächenschicht sind dem Fachmann bekannt. Insbesondere kann das Aufbringen der Schichten durch Fluten und anschließende Trocknung der Schicht erfolgen. Dabei erfolgt die Trocknung jeweils so lange, bis die jeweilige Schicht staubtrocken ist. Als Staubtrocken bezeichnet der Fachmann die getrocknete Beschichtung die beim Anfassen mit den Fingern keinen erkennbaren Abdruck hinterlässt.

Alternativ kann das Aufbringen der Zusammensetzungen aber auch durch andere Verfahren erfolgen, z. B. im Sprühverfahren oder im Tauchverfahren.

Das erfindungsgemäße Verfahren zur Herstellung eines Schichtenverbundes kann einen weiteren Schritt (c) umfassen, bei dem der Schichtenverbund nach Aufbringen der Primerschicht und der Oberflächenschicht auf eine Temperatur von 100 bis 160°C erhitzt wird, vorzugsweise bei 120 bis 140°C. Hierdurch werden die neu aufgetragenen Schichten eingebrannt. Das Erhitzen kann für eine Dauer von z. B. 30 min bis 4 h, vorzugsweise von 1 h bis 3 h erfolgen.

Schließlich betrifft die Erfindung auch einen Schichtenverbund, der mit dem erfindungsgemäßen Verfahren hergestellt wurde. Dieser Schichtenverbund weist die hierin beschriebenen vorteilhaften Eigenschaften auf.

### Beispiele

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

### Beispiel 1: Primerzusammensetzungen

Es wurden eine Reihe verschiedener Primerzusammensetzungen für die anschließende Testung in entsprechenden Schichtenverbunden hergestellt.

Hierzu wurde zunächst ein Primerkonzentrat hergestellt, welches das organische Lösungsmittel und das Polyalkylmethacrylat enthielt:
Es wurden 18,457 kg DAA (Diacetylalkohol) vorgelegt. Anschließend wurden 2,461 kg Degalan M920 hinzugefügt. Die resultierende Mischung wurde unter Rühren auf 60 bis 70°C erwärmt und zwischen 4 und 6 Stunden gerührt bis eine homogene Lösung entstanden war. Anschließend wurde die Lösung auf Raumtemperatur abgekühlt. Nach dem Abkühlen wurde mittels Hinzufügung von 1-Methoxy-2-propanol (MOP) ein Festkörperanteil von 7,5 % eingestellt.

Zu 200 g des so hergestellten Primerkonzentrats wurden die in der folgenden Tabelle angegebenen Mengen von Siliciumdioxid-Nanopartikel in Form von Nanopol® C764 (Evonik Industries AG) und, optional, UV-Absorber 4,6-Dibenzoyl-2-(3-triethyoxysilylpropyl)resorcinol hinzugefügt. Die entstehende Mischung wurde für 20 Minuten im Ultraschallbad gerührt. Anschließend wurde der gewünschte Festkörperanteil mittels Hinzufügung von MOP eingestellt.

| **System** | **Anteil Nanopartikel aus Nanopol® C764 [% bezogen auf FK]** | **Zugabe von UV-Absorber [% bezogen auf FK]** | **Eingestellter FK[%]** | **Risse im Lack** |
|---|---|---|---|---|
| Referenz 1 | SHP401 der Fa. Momentive | | 2, 0 | Viele |
| Referenz 2 | 0,0 | - | 7 | Viele |
| A | 2,47 | - | 7 | Viele |
| B | 11,1 | - | 7 | Viele |
| C | 13,0 | - | 7 | Vereinzelt |
| D | 16,7 | - | 7 | Vereinzelt |
| E | 20 | - | 7 | Vereinzelt |
| F | 2,47 | - | 2,5 | Viele |
| G | 13,0 | - | 2,5 | Keine |
| H | 20,0 | - | 2,5 | Keine |
| I | 13,0 | 3 | 2,5 | Keine |
| J | 13,0 | 6 | 2,5 | Keine |
| K | 13,0 | 12 | 2,5 | Keine |

| | | | | |
|---|---|---|---|---|
| FK = Festkörper, UV-Absorber = 4,6-Dibenzoyl-2-(3-triethyoxysilylpropyl)resorcinol | | | | |

Das in der Tabelle beschriebene "Referenz 1"-Primersystem umfasst statt Degalan M920 (Evonik AG) SHP401 (Momentive) und keine Siliciumdioxid-Nanopartikel. Das in der Tabelle beschriebene "Referenz 2"-Primersystem umfasst Degalan M920 (Evonik AG) aber keine Siliciumdioxid-Nanopartikel.

Die Primerzusammensetzungen "Referenz" sowie A bis K wurden anschließend zur Beschichtung von Kunststoff-Formkörpern verwendet wie untenstehend beschrieben.

### Beispiel 2: Oberflächenzusammensetzungen

Es wurde die folgende Oberflächenzusammensetzung (Topcoats) für die anschließende Testung in entsprechenden Schichtenverbunden hergestellt.
1) 45,09 Gew.-% kolloidales Siliciumdioxid Ludox LS
2) 54,69 Gew.-% Methyltrimethoxysilan (MTMS)
3) 0,02 Gew.-% Polyetherdisilan BYK-342
4) 0,20 Gew.-% Methyltriacetoxysilan (MTAS)
5) n-Butanol zum Einstellen des Festkörpers

Die Silane (MTMS und MTAS) wurden gemischt. Anschließend wurde unter Rühren das Siliciumdioxid langsam zugegeben und für 24 h bei Raumtemperatur gerührt. Zuletzt wurde die Lösung auf einen Festkörperanteil von ca. 21 % und der pH-Wert auf 7.2 eingestellt und das Verlaufsmittel hinzugefügt.

### Beispiel 3: Beschichtung von Polycarbonatscheiben

Es wurden Polycarbonatscheiben (PC-Scheiben) mit den Maßen 300 x 140 x 3mm mit einem Beschichtungssystem aus den oben beschriebenen Primer- und Oberflächenzusammensetzungen beschichtet. Auf die PC-Scheiben wurden mittels eines Flutverfahrens wie folgt zunächst die Primerzusammensetzung und anschließend eine Oberflächenzusammensetzung aufgetragen:
Zunächst wurde die Primerzusammensetzung aufgeflutet und etwa 20 bis 30 min getrocknet. Die Primerzusammensetzungen G bis K, mit einem Festkörperanteil von 2,5% resultierten in einer Primerschicht mit einer Dicke von 0,3 bis 1,0 µm. Wenn die Oberfläche staubtrocken war, wurde die Oberflächenzusammensetzung aufgeflutet. Nach etwa 20 bis 40 min war die neu entstandene Oberfläche wiederum staubtrocken. Anschließend wurde die Beschichtung für 120 min bei 130°C gehärtet.

### Beispiel 4: Testung der Schichtenverbunde

Die wie in Beispiel 3 geschildert hergestellten Schichtenverbunde wurden anschließend auf Rissbildung, Kratzfestigkeit und Bewitterungsstabilität getestet. An Proben, die Risse zeigten, wurden keine weiteren Tests durchgeführt.

Rissbildung im Lack wurde visuell überprüft.

Der Wischertest wurde wie in ECE R43 beschrieben durchgeführt (Addendum 42 - Regulation No. 43, Revision 3 - Amendment 4, *Uniform provisions concerning the approval of safety glazing materials and their installation on vehicles,* S. 16 ff: "4.9. Wiper laboratory test"; auch in dem dazugehörigen Dokument ECE/TRANS/WP.29/2015/11; in Kraft ab dem 8. Oktober 2015). Ein Ergebnis von <2% im Wischertest bedeutet, dass die Scheibe die Anforderung der ECE R43 bestanden hat.

Für die Bestimmung der Haftungsgüte der unterschiedlichen Beschichtungssysteme wurden entsprechende Muster für unterschiedliche Zeiten in 95°C warmen Wasser gelagert. Im Anschluss wurde die Haftung der Beschichtungssysteme gemäß DIN EN ISO 2409 geprüft. Die Haftung wurde mit "i.O." (in Ordnung) bewertet, sofern der Gitterschnitt nach dem Tapetest (verwendet wurde das Klebeband der Fa TESA mit der Typenbezeichnung 4287) gemäß DIN EN ISO 2409 mit Gt0 bewertet werden konnte.

Die Bewitterungsstabilität wurde wie in ECE R43 beschrieben getestet (Addendum 42 - Regulation No. 43, Revision 3 - Amendment 4, *Uniform provisions concerning the approval of safety glazing materials and their installation on vehicles,* S. 35 ff: "6.2 Test of resistance to simulated weathering"; auch in dem dazugehörigen Dokument ECE/TRANS/WP.29/2015/11; in Kraft ab dem 8. Oktober 2015).

Der Haze-Wert der Verbundscheiben wurde nach der ASTM D1003 "Standard Test Method for Haze and Luminous Transmittance of Transparent Plastics" bestimmt.

| **System** | **Risse im Lack** | **ΔHaze nach Wischertest** | **Haftung (Gt0 für x h)** | **Bewitterung** | **Haze** |
|---|---|---|---|---|---|
| Referenz | Viele | - | - | - | - |
| A | Viele | - | - | - | - |
| B | Viele | - | - | - | - |
| C | Vereinzelt | - | - | - | - |
| D | Vereinzelt | - | - | - | - |
| E | Vereinzelt | - | - | - | - |
| F | Viele | - | - | - | - |
| G | Keine | <2% | >8h | Nicht bestanden | <1% |
| H | Keine | <2% | >8h | Nicht bestanden | <1% |
| I | Keine | <2% | >8h | Bestanden | <1% |
| J | Keine | <2% | >8h | Bestanden | <1% |
| K | Keine | <2% | >8h | Bestanden | <1% |

Es zeigte sich, dass alle getesteten Verbunde mit einem Anteil von Siliciumdioxid-Nanopartikeln von 30 bis 50%, deren Primerzusammensetzung mit einem Festkörperanteil von 2,5% auf die PC-Scheibe aufgeflutet wurden (Scheiben G bis K) den Wischertest nach ECE R43 bestanden. Von diesen Scheiben bestanden alle Scheiben den Bewitterungstest nach ECE R43, denen mindestens 3 Gew.-% UV-Absorber, bezogen auf den Festkörperanteil, zugesetzt wurden.

### Beispiel 5: Primerzusammensetzungen II

Es wurden analog zu Beispiel 1 weitere Primerzusammensetzungen für die anschließende Testung in entsprechenden Schichtenverbunden hergestellt.

| | **Zusammensetzung** |
|---|---|
| **A** | *Rezeptur A5 gemäß* DE 10 2016 112 319 A1 |
| | 50 Gew.-% Degalan M920 bezogen auf Festkörperanteil 50 Gew.-% Polysiloxan bezogen auf Festkörperanteil Festkörper eingestellt auf 5% mit einem Gemisch aus Diacetylalkohol und 1-Methoxy-2-propanol in einem Verhältnis von 1:2 |
| **B** | |
| | 87 Gew.-% Degalan M920 bezogen auf Festkörperanteil 13 Gew.-% SiO₂ Nanopartikel aus Nanopol® C764 bezogen auf Festkörperanteil Festkörper eingestellt auf 2,5% mit einem Gemisch aus Diacetylalkohol und 1-Methoxy-2-propanol in einem Verhältnis von 1:2 |
| **C** | |
| | 64 Gew.-% Degalan M920 bezogen auf Festkörperanteil 16 Gew.-% Degalan VP1080F bezogen auf Festkörperanteil 20 Gew.-% SiO₂ Nanopartikel aus Nanopol® C764 bezogen auf Festkörperanteil Festkörper eingestellt auf 2,5% mit einem Gemisch aus Diacetylalkohol und 1-Methoxy-2-propanol in einem Verhältnis von 1:2 |
| **D** | |
| | 38 Gew.-% Degalan M920 bezogen auf Festkörperanteil 9 Gew.-% Degalan VP1080F bezogen auf Festkörperanteil 48 Gew.-% SiO₂ Nanopartikel bezogen auf Festkörperanteil 5 Gew.-% UV-Absorber bezogen auf Festkörperanteil Festkörper eingestellt auf 2,5% mit einem Gemisch aus Diacetylalkohol und 1-Methoxy-2-propanol in einem Verhältnis von 1:2 |

Als UV-Absorber wurde 4,6-Dibenzoyl-2-(3-triethyoxysilylpropyl)resorcinol verwendet. Ein Anteil von 9 Gew.-% Degalan VP1080F in Beispiel D führte zu einer Säurezahl der Gesamtzusammensetzung bezogen auf ihren Festkörperanteil von etwa 7 mgKOH/g.

### Beispiel 6: Testung der Schichtenverbunde

Schichtenverbunde wurden mit den "Primerzusammensetzungen II" (Beispiel 5) und der in Beispiel 2 beschriebenen Oberflächenzusammensetzung analog zur in Beispiel 3 beschriebenen Vorgehensweise hergestellt. Neben den PC-Scheiben mit den Maßen 300 x 140 x 3 mm, wie in Beispiel 3, wurden hier zusätzlich mit jeder Kombination aus den Primerzusammensetzungen (Beispiel 5) und der Oberflächenzusammensetzung (Beispiel 2) PC-Scheiben mit den Maßen 400 x 1800 x 3 mm beschichtet. Die so hergestellten Schichtenverbunde wurden mittels der in Beispiel 4 näher erläuterten Verfahren auf Rissbildung, Witterungsbeständigkeit und ihre Haftung getestet.

| | Risse ab einer Lauflänge von | Bewitterung nach ECE R43 bestanden | Haftung Gt0 bis x Std Kochtest |
|---|---|---|---|
| A | 1500 mm | nicht bestanden | 10 |
| B | 1500 mm | nicht bestanden | 12 |
| C | 1700 mm | nicht bestanden | >24h |
| D | 1700 mm | bestanden | >24h |

Es zeigte sich unter anderem, dass durch die Verwendung von Polyalkylmethacrylaten mit einer Säurezahl > 0 (VP 1080F) die Haftung deutlich verbessert werden kann (Scheiben C und D). Darüber hinaus verringerte die Verwendung von Siliciumdioxid-Nanopartikeln die Rissbildungstendenz deutlich, insbesondere in Konzentrationen von mehr als 30 Gew.-%. Schließlich wurde die UV-Beständigkeit des Beschichtungssystems durch die Hinzufügung eines UV-Absorbers deutlich erhöht, ohne die vorgenannten verbesserten Eigenschaften negativ zu beeinflussen.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Beschichtungssystem zur Herstellung eines hochkratzfesten Schichtenverbundes umfassend eine Primerzusammensetzung und eine Oberflächenzusammensetzung, **dadurch gekennzeichnet, dass** die Primerzusammensetzung
a1) Polyalkylmethacrylat,
a2) Siliciumdioxid -Nanopartikel, und
a3) organisches Lösungsmittel
umfasst.

2. Beschichtungssystem nach Anspruch 1, **dadurch gekennzeichnet, dass** das Siliciumdioxid amorphes Siliciumdioxid ist.

3. Beschichtungssystem nach einem der Ansprüche 1 oder 2, **dadurch gekennzeichnet, dass** die Primerzusammensetzung mindestens 10 Gew.-% Siliciumdioxid-Nanopartikel bezogen auf ihren Festkörperanteil umfasst.

4. Beschichtungssystem nach einem der vorangegangenen Ansprüche, **dadurch gekennzeichnet, dass** die Nanopartikel eine durchschnittliche Partikelgröße von 10 bis 30 nm aufweisen.

5. Beschichtungssystem nach einem der vorangegangenen Ansprüche, **dadurch gekennzeichnet, dass** die Primerzusammensetzung bezogen auf ihren Festkörperanteil weniger als 25 Gew.-% Polysiloxan umfasst.

6. Beschichtungssystem nach einem der vorangehenden Ansprüche, **dadurch gekennzeichnet, dass** die Primerzusammensetzung kein Polysiloxan umfasst.

7. Beschichtungssystem nach einem der vorangegangenen Ansprüche, **dadurch gekennzeichnet, dass** die Oberflächenzusammensetzung
b1) kolloidales Siliciumdioxid,
b2) Methyltrimethoxysilan und/oder Methyltriethoxysilan,
b3) Methyltriacetoxysilan, und
b4) organisches Lösungsmittel umfasst, vorzugsweise n-Butanol und/oder Isopropanol.

8. Schichtenverbund umfassend eine Kunststoffschicht, eine an die Kunststoffschicht angrenzende Primerschicht und eine an die Primerschicht angrenzende Oberflächenschicht, **dadurch gekennzeichnet, dass** die Primerschicht und Oberflächenschicht hergestellt sind aus einer Primerzusammensetzung bzw. einer Oberflächenzusammensetzung des Beschichtungssystems gemäß eines der Ansprüche 1 bis 7.

9. Schichtenverbund nach Anspruch 8, **dadurch gekennzeichnet, dass** er im Wischertest nach ECE R43 ein Testergebnis von ≤ 2 % ΔHaze erzielt und den Bewitterungstest nach ECE R43 besteht.

10. Schichtenverbund nach einem der vorangegangenen Ansprüche, **dadurch gekennzeichnet, dass** die Kunststoffschicht eine Polycarbonatschicht oder eine Polymethyl(meth)acrylatschicht ist.

11. Verwendung eines Schichtenverbundes nach einem der Ansprüche 8 bis 10, **dadurch gekennzeichnet, dass** er im Außenbereich eingesetzt wird, insbesondere für Automobil-Verscheibungen.

12. Verfahren zur Herstellung eines Schichtenverbundes, Schritte umfassend bei denen man
(a) die Primerzusammensetzung eines Beschichtungssystems nach einem der Ansprüche 1 bis 7 als Primerschicht auf eine Kunststoffschicht aufbringt und trocknet, und
(b) anschließend die Oberflächenzusammensetzung eines Beschichtungssystems nach einem der Ansprüche 1 bis 7 als Oberflächenschicht auf die Primerschicht aufbringt und trocknet.

13. Schichtenverbund, **dadurch gekennzeichnet, dass** er mit dem Verfahren nach Anspruch 12 und/oder mit dem Beschichtungssystem nach einem der Ansprüche 1 bis 7 hergestellt ist.
